(19) Europäisches Patentamt
European Patent Office
Office européen des brevets

(11) Publication number: 0 192 869
A2

(12) # EUROPEAN PATENT APPLICATION

(21) Application number: 85303940.2

(22) Date of filing: 04.06.85

(51) Int. Cl.4: C 08 J 9/02
C 08 L 79/08, C 08 G 73/10

(30) Priority: 25.02.85 US 705129

(43) Date of publication of application:
03.09.86 Bulletin 86/36

(84) Designated Contracting States:
AT BE CH DE FR GB IT LI LU NL SE

(71) Applicant: Gagliani, John
6280 Lance Place
San Diego California 92120(US)

(71) Applicant: Long, John V.
1756 E. Lexington Avenue
El Cajon California 92121(US)

(72) Inventor: Gagliani, John
6280 Lance Place
San Diego California 92120(US)

(72) Inventor: Long, John V.
1756 E. Lexington Avenue
El Cajon California 92121(US)

(74) Representative: Spencer, Graham Easdale et al,
A.A. Thornton & CO Northumberland House 303-306,
High Holborn
London WC1V 7LE(GB)

(54) **Method of making polyimide foams.**

(57) A method of making a resilient, flame resistant, non-friable polyimide foam comprises:

(a) mixing at least one aromatic dianhydride with an alcohol and heating the resulting mixture to form a half-ester,

(b) mixing a diamine component comprising at least one aliphatic diamine and at least one aromatic diamine with the product from step (a),

(c) drying the resulting mixture, and

(d) heating the resulting solid to give a polyimide foam.

EP 0 192 869 A2

Method of making polyimide foams

The present invention is concerned with polyimide resins and, more particularly, with a method of making resilient, flame resistant, non-friable polyimide foams.

U.S. Patents 3554939 and 4296208 disclose certain polyimide compositions which are flame resistant and useful as foams. The compositions described in these patents are made by first treating tetracarboxylic acid dianhydride with an alcohol to form a half-ester. The polyimide-forming material is prepared by mixing two moles of a mixture of suitable diamines, at least 1.4 moles being an aromatic diamine, with each mole of half-ester to produce a viscous liquid containing an intimate, unpolymerised mixture which can be converted to a high molecular weight polymer by the application of heat.

The liquid can be coated on to a surface and dried by heating at a temperature of from 66° to 88°C for a period of from 14 to 18 hours. Alternatively, the composition can be spray dried. The dry material can be crushed, pulverised, and sieved and the resulting powder then converted into a foam by various means such as dielectric, thermal, or microwave heating.

The resulting foam is flexible, resilient and generally suitable for use in insulation and, to an extent, in seat cushions. It has been found, however, that the

foam material of the prior art has a limited life in applications, such as seat cushions, where it is repeatedly compressed and released. When exposed to dynamic fatigue, these foams tend to particulate and eventually totally disintegrate.

We have now found that by suitably varying certain ingredients, within specified limits, starting materials similar to those described in the patents cited above can be used to produce foams of polyimide cellular structure which combine flexibility, resilience, flame resistance, and lack of toxic emissions when charring with the ability to resist vibration, shock and high cycle dynamic fatigue without particulating or otherwise disintegrating.

The basic steps in producing the resilient foam of the present invention consist of partially esterifying an aromatic dianhydride with an alcohol to produce a half-ester, adding a mixture of suitable diamines and any desired additives, drying the mixture to a film or powder, and finally heating the dry material to a temperature sufficient to cause the material to melt and spontaneously foam. The heating appears to cause the material to simultaneously undergo both a condensation reaction and an exchange reaction. The condensation reaction produces water and alcohol vapours which cause the molten mass to expand. As the reactions proceed, the molten mass forms a cellular structure which becomes self-supporting and finally cures to an imide polymer.

According to the present invention, therefore, there is provided a method of making a resilient, flame resistant, non-friable polyimide foam, which comprises:

(a) mixing at least one aromatic dianhydride with an alcohol and heating the resulting mixture to form a half-ester,

(b) mixing a diamine component comprising at

least one aliphatic diamine and at least one aromatic diamine with the product from step (a),

(c) drying the resulting mixture, and

(d) heating the resulting solid to give a polyimide foam.

Suitable aromatic dianhydrides for use in the method of the invention include those described in the patents cited above. Due to their ready availability at reasonable prices and the excellent foams which they produce, preferred dianhydrides are pyromellitic dianhydride and 3,3',4,4'-benzophenone tetracarboxylic acid dianhydride (BTDA), and mixtures thereof.

The dianhydride is partially esterified by dissolving it in a suitable alcohol at a suitable temperature. Preferred alcohols are aliphatic alcohols having up to 7 carbon atoms and aromatic alcohols, either of which may have halogen or amino substituents, and mixtures of two or more thereof. The best results have been obtained with methyl alcohol.

Once the partial esterification is complete, selected diamines are added to the solution of the half-ester. Preferably, an approximately stoichiometric quantity of diamine component is used. The diamine component used in the method according to the present invention comprises both aromatic-aliphatic and aliphatic diamines. (The description "aromatic-aliphatic" is used herein to describe a diamine having both aromatic and aliphatic moieties in the molecule). The diamine component can consist almost entirely of aromatic-aliphatic diamine(s) or of aromatic-aliphatic diamine(s) containing up to 50 mole % of aliphatic diamine(s). The resulting foam has excellent flexibility and resistance to fire, but resistance to particulation decreases as the proportion of aliphatic diamines is increased. Preferred aromatic-aliphatic diamines for use in the method of the

invention are those which contain two phenyl rings joined by an aliphatic chain and have the formula:

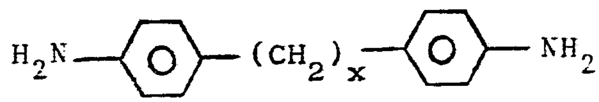

where x is an integer of from 1 to 20. A typical example is 4,4'-diaminodiphenylpropane (x = 3).

While the aliphatic chain between the phenyl rings can have as many as 20 carbon atoms, the flame resistance of the foam tends to be reduced with the longer aliphatic chains. Where flame resistance is important, it is preferred that x in the above formula is from 1 to 3. While the amino groups are preferably in the *para*-positions of the phenyl rings, as shown in the above formula, good results are also obtained with the amino groups in the *meta*-positions.

Preferred aliphatic diamines for use in the method of the invention are those having the formula:

$$H_2N-(CH_2)_y-NH_2$$

where y is an integer of from 2 to 12. Typical aliphatic diamines include 1,2-diaminoethane, 1,3-diaminopropane, 1,4-diaminopropane, 1,6-diaminohexane, 1,10-diaminodecane, 1,12-diaminododecane, and mixtures of two or more thereof.

While the physical or chemical basis for the improved physical characteristics of the foam produced by the method of the present invention, primarily its non-friability, is not fully understood, it appears to result

from the use of a diamine component comprising an aromatic-aliphatic diamine mixed with an aliphatic diamine, whereas the prior art used an aromatic diamine alone or mixed with an aliphatic and/or heterocyclic diamine.

Of the aromatic-aliphatic and aliphatic diamines described above, the best results were obtained with a mixture of 4,4'-diaminodiphenylmethane and 1,6-diaminohexane.

Additives to improve various characteristics of the final foam may be added as desired. Any appropriate additives may be used, such as fillers, surfactants, ultraviolet absorbers, or the like. The inclusion of a surfactant improves the uniformity of the foam cellular structure. Suitable surfactants for use in the method of the invention include, for example, Dow Corning Corp. 190 or 193 (a silicone surfactant), FC430 from Minnesota Mining & Manufacturing Co., Zonyl FSC from E.I. duPont de Nemours & Co., and L550 from Union Carbide Corp. While any suitable concentration may be used, from 0.01% to 2% by weight (based on the weight of the resin prior to drying) is preferred. Of these surfactants, the best results have been obtained with Zonyl FSC. Fillers and reinforcing additives may also be added prior to drying the resin. Typical fillers include Kevlar aramid fibres, graphite fibres, glass fibres, carbon and graphite fibres, Teflon fluorocarbon powders, and mixtures of two or more thereof.

The resin can be dried by any suitable means. Simply heating the resin in an oven at a temperature of from 65° to 95°C until dry is satisfactory, but other conventional methods such as spray drying, rotary drying, thin film evaporation, <u>etc</u>. can be used. The resulting free-flowing powder or flakes can be further ground or treated as required, and can be stored indefinitely at

room temperature.

The final step in converting the powder into a foam is accomplished by heating the powder to a selected foaming temperature for a suitable period of time. The foaming can be accomplished by any suitable heating means, such as dielectric, thermal, or microwave heating. For example, heating in an air-circulating oven at a temperature of from 120° to 320°C for a period of 10 to 60 minutes is very effective. Microwave heating is preferred in many cases due to the uniformity and speed of heating.

As the powder is heated it first melts, then as the condensation reaction begins, water and alcohol are released and vaporised, causing the molten mass to expand. The resulting cellular structure becomes self-supporting and finally cures to an imide polymer. The resulting foam is non-friable, tough, resilient and does not emit significant smoke or toxic by-products when exposed to an open flame.

In order that the invention may be more fully understood, the following examples are given by way of illustration only.

Example 1

322.2g (1.0 mole) of 3,3',4,4'-benzophenone tetracarboxylic acid dianhydride (BTDA) was dissolved in isopropanol (400g) and the solution refluxed (at about 75°C) until clear. The solution was then cooled to 50°C and 148.7g (0.75 mole) of 4,4'-diaminodiphenylmethane and 29g (0.25 mole) of 1,6-diaminohexane were added. The mixture was then heated at 55°C until clear and the liquid poured into a shallow dish and heated in an air-circulating oven at 82°C until dry (about 1 hour). The dry resin was then pulverised into a powder having a maximum particle diameter of about 80 mesh. A 100g sample of the powder was placed in an oven at a temperature of 288°C for about

1 hour; a yellow resilient foam having a density of 12.8 $kg/m^3$ ($0.8 lb/ft^3$) was obtained. The foam did not burn or give off smoke or toxic gases when exposed to an open flame and when tested for dynamic fatigue in accordance with the method described in ASTM-D-3574, paragraph 76 to 82, the foam did not particulate and was found to be non-friable.

Example 2

The procedure of Example 1 was repeated, but using the following diamines: (a) 188g (0.95 mole) of 4,4'-diaminodiphenylethane and 6g (0.05 mole) of 1,6-diaminohexane, (b) 99g (0.5 mole) of 4,4'-diaminodiphenylethane and 58g (0.5 mole) of 1,6-diaminohexane, (c) 49.5g (0.25 mole) of 4,4'-diaminodiphenylethane and 87g (0.75 mole) of 1,6-diaminohexane, and (d) 108g (1.0 mole) of p-phenylenediamene. Example (d) is not in accordance with the method of the present invention and is included for purposes of comparison. Excellent, non-friable, flame resistant foams were produced in Examples (a) and (b). Example (c), which used a high proportion (75 mole %) of aliphatic diamine, produced a foam which was flexible, but had a high density ($33.6kg/m^3$) and burnt with the emission of substantial quantities of toxic smoke when exposed to an open flame. Comparitive example (d), which used an aromatic diamine alone, produced a good foam, but it particulated when subjected to the fatigue test referred to in Example 1.

Example 3

The procedure of Example 1 was repeated, but using the following diamines: (a) 113g (0.6 mole) of 4,4'-diaminodiphenylpropane and 20g (0.4 mole) of 1,2-diaminoethane, (b) 150g (0.8 mole) of 4,4'-diaminodiphenylpropane and 22g (0.2 mole) of 1,12-diaminododecane, and (c) 41g (0.9 mole) of 4,4'-diaminodiphenylethane and 14g (0.1 mole) of 1,8-diaminooctane. In

each case an excellent, non-friable, flame resistant, resilient foam was obtained.

Example 4

The procedure of Example 1 was repeated, but instead of BTDA the following dianhydrides were used: (a) 218g (1.0 mole) of pyromellitic dianhydride and (b) 109g (0.5 mole) of pyromellitic dianhydride and 161g (0.5 mole) of 3,3',4,4'-benzophenone tetracarboxylic acid dianhydride. In both cases non-friable, flame resistant foams were produced which were more rigid than that obtained in Example 1.

Example 5

The procedure of Example 1 was repeated, but instead of isopropanol the following solvents were used: (a) ethyl alcohol, (b) 2-aminoethanol, (c) benzine, (d) N,N-dimethylacetamide, and (e) acetone. Examples (c), (d), and (e) are not in accordance with the method of the present invention and are included for purposes of comparison. In those cases (a) and (b) where a reactive solvent was used to esterify the dianhydride, an excellent non-friable, flame resistant foam was obtained. Where an inert solvent was used so that no esterification took place, as in (c), (d), and (e), the resulting solid did not foam on heating.

Example 6

The procedure of Example 1 was followed and five samples of the dry powdered solid were prepared. The five samples were placed in pre-heated circulating air ovens at the following temperatures for the following time periods: (a) 125°C for 40 minutes, (b) 200°C for 30 minutes, (c) 220°C for 10 minutes, (d) 235°C for 30 minutes, and (e) 310°C for 30 minutes. Each sample formed a non-friable foam of good resiliency and flame resistance.

Example 7

The procedure of Example 1 was repeated, but the following additives were added to the mixture after the addition of the diamines: (a) 1% by weight of Zonyl FSC fluorocarbon surfactant and (b) 2% by weight of short graphite fibres. In both cases the weight added was based on the weight of the mixture. The mixtures were well stirred and the remaining steps of Example 1 then carried out. The foam of Example (a) was found to have improved foam cell uniformity and the foam of Example (b) was found to have increased stiffness.

Example 8

The procedure of Example 1 was repeated, except that the resulting mixture was dried to a powder by spray drying and the heating step was carried out in a microwave oven. The dry powder was placed in the oven and a power of 1.0kW was applied. Rapid melting and expansion occurred, producing an excellent non-friable resilient foam after 6 minutes.

Claims:

1. A method of making a resilient, flame resistant, non-friable polyimide foam, which comprises:

(a) mixing at least one aromatic dianhydride with an alcohol and heating the resulting mixture to form a half-ester,

(b) mixing a diamine component comprising at least one aliphatic diamine and at least one aromatic diamine with the product from step (a),

(c) drying the resulting mixture, and

(d) heating the resulting solid to give a polyimide foam.

2. A method according to claim 1, in which the alcohol is an aliphatic alcohol having from 1 to 7 carbon atoms, an aromatic alcohol, or a mixture of two or more thereof.

3. A method according to claim 1 or 2, in which the diamine component comprises from 0.1 to 50 mole % of aliphatic diamine.

4. A method according to any of claims 1 to 3, in which the aliphatic diamine has the formula:

$$H_2N-(CH_2)_y-NH_2$$

where y is an integer of from 2 to 12.

5. A method according to any of claims 1 to 4, in which the aromatic diamine has the formula:

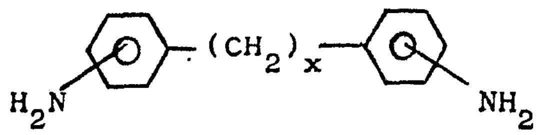

where x is an integer of from 1 to 20 and the $NH_2$ groups are located at the <u>meta</u>-positions or the <u>para</u>-positions of the phenyl rings.

6. A method according to any of claims 1 to 5, in which the diamine component comprises 1,6-diaminohexane and 4,4-diaminodiphenylmethane.

7. A method according to any of claims 1 to 6, in which the resulting mixture is dried (step (c)) by spray drying.

8. A method according to any of claims 1 to 7, in which the resulting solid is heated (step (d)) at a temperature of from 120° to 320°C.

9. A method according to claim 8, in which the solid is heated by microwave energy.